(19) Europäisches Patentamt
European Patent Office
Office européen des brevets

(11) **EP 3 929 044 B1**

(12) **EUROPÄISCHE PATENTSCHRIFT**

(45) Veröffentlichungstag und Bekanntmachung des Hinweises auf die Patenterteilung:
**12.03.2025 Patentblatt 2025/11**

(21) Anmeldenummer: **21182677.1**

(22) Anmeldetag: **14.11.2016**

(51) Internationale Patentklassifikation (IPC):
**B60W 10/06** (2006.01)   **B60W 10/184** (2012.01)
**B60W 30/14** (2006.01)   **B60T 8/32** (2006.01)
**B60W 20/16** (2016.01)   **H04W 4/44** (2018.01)

(52) Gemeinsame Patentklassifikation (CPC):
**B60W 30/143; B60T 8/323; B60W 10/06;**
**B60W 10/184; B60W 20/16;** B60T 2201/02;
B60T 2210/36; B60T 2260/08; B60W 2510/0657;
B60W 2530/10; B60W 2552/15; B60W 2552/20;
H04W 4/44

(54) **VERFAHREN ZUM ADAPTIVEN REGELN EINER FAHRZEUGGESCHWINDIGKEIT IN EINEM FAHRZEUG SOWIE GESCHWINDIGKEITSREGELANLAGE ZUM DURCHFÜHREN DES VERFAHRENS**

METHOD FOR ADAPTIVELY CONTROLLING A VEHICLE SPEED IN A VEHICLE AND SPEED CONTROL SYSTEM FOR CARRYING OUT THE METHOD

PROCÉDÉ DE RÉGULATION ADAPTATIVE D'UNE VITESSE DE VÉHICULE DANS UN VÉHICULE, AINSI QU'INSTALLATION DE RÉGULATION DE LA VITESSE PERMETTANT DE METTRE EN UVRE LE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2015 DE 102015015923**

(43) Veröffentlichungstag der Anmeldung:
**29.12.2021 Patentblatt 2021/52**

(62) Dokumentnummer(n) der früheren Anmeldung(en) nach Art. 76 EPÜ:
**16797744.6 / 3 386 823**

(73) Patentinhaber: **ZF CV Systems Hannover GmbH 30453 Hannover (DE)**

(72) Erfinder:
• **RAGAB, Ahmed**
  **30855 Langenhagen (DE)**
• **BREUER, Karsten**
  **88179 Oberreute (DE)**

(74) Vertreter: **Ohlendorf, Henrike**
  **ZF CV Systems Hannover GmbH**
  **Am Lindener Hafen 21**
  **30453 Hannover (DE)**

(56) Entgegenhaltungen:
**EP-A2- 1 288 056      WO-A1-2013/191614**
**US-A1- 2014 277 835**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum adaptiven Regeln einer Fahrzeuggeschwindigkeit in einem Fahrzeug, insbesondere Nutzfahrzeug mit einer Geschwindigkeitsregelanlage, sowie eine Geschwindigkeitsregelanlage zum Durchführen des Verfahrens.

In Fahrzeugen, insbesondere Nutzfahrzeugen, sind Regelungen für eine Fahrzeuggeschwindigkeit als Geschwindigkeitsregelanlage (GRA) oder auch als Tempomat bekannt. Diese regeln die aktuelle Fahrzeuggeschwindigkeit auf eine vom Fahrer vorgegebene Referenzgeschwindigkeit ein, ohne dass eine Betätigung des Bremspedals notwendig ist. Erweitert werden können derartige Systeme durch eine adaptive Regelung, die die Fahrzeuggeschwindigkeit zusätzlich vorausschauend regelt und dadurch eine spritsparende Fahrweise zum Erreichen der Referenzgeschwindigkeit vorgibt. Zur spritsparenden adaptiven Regelung werden beispielsweise Streckeninformationen, insbesondere eine Topographie eines vorausliegenden Streckenabschnitts berücksichtigt. Ein derartiges System ist beispielsweise als Predictive Powertrain Control (PPC) System bekannt.

In DE 10 2014 204 206 A1 ist eine Fahrwegnavigation mit optimalem Geschwindigkeitsprofil vorgesehen, wobei für einen vordefinierten Weg von einer ersten Position des Fahrzeuges bis zu einem Zielort über eine dynamische Programmierung eine optimale Fahrzeuggeschwindigkeit berechnet wird. Somit wird beispielsweise bei Fahrtbeginn ein optimales Geschwindigkeitsprofil erstellt, das die Fahrzeug-Soll-Geschwindigkeiten für jeweilige Stellen auf der vordefinierten Strecke angibt, so dass die Strecke mit einem optimierten Energieverbrauch abgefahren werden kann. Das Geschwindigkeitsprofil wird hierbei außerhalb des Fahrzeuges ermittelt, so dass rechnerische intensive Rechenoperationen nicht auf dem Fahrzeug ausgeführt werden.

Die US 20140277971 A1 zeigt ebenfalls ein Verfahren zum Berechnen eines Geschwindigkeitsprofils zwischen einer vorgegebenen Startposition und einer Endposition, wobei eine zwischen der Startposition und der Endposition zu fahrende Strecke bestimmt oder vorgegeben wird. Für diese zu fahrende Strecke wird ein optimales Geschwindigkeitsprofil erstellt, wobei Streckeninformationen, beispielsweise eine Steigung, Geschwindigkeitsbegrenzungen, Staus, o.ä., berücksichtigt werden. Die Berechnungen werden hierbei vorab beispielsweise auf einem Computer oder einer Cloud ausgeführt und abgespeichert, so dass das vorab ermittelte Geschwindigkeitsprofil für die gesamte Strecke während der Fahrt zum Regeln der Fahrzeuggeschwindigkeit verwendet werden kann.

Die US8386091 B1 zeigt ein vergleichbares Verfahren zum Berechnen eines Geschwindigkeitsprofils, wobei die Berechnung außerhalb des Fahrzeuges auf einem Cloud-basierten Computer stattfindet. Dazu wird zunächst eine zu fahrende Strecke durch den Fahrer vorgegeben und für diese Strecke ein spritsparendes Geschwindigkeitsprofil anhand von Streckeninformationen bestimmt.

Nachteilig hierbei ist, dass die gesamte zu fahrende Strecke berechnet wird und somit viel Rechenaufwand und Rechenzeit nötig ist, um das Geschwindigkeitsprofil der vordefinierten Strecke zu bestimmen. Zudem basiert die Berechnung auf aktuellen Werten vor dem Fahrtbeginn, so dass bei einem Ereignis während der Fahrt, beispielsweise einem neu entstandenen oder einem aufgelösten Stau oder einer unbeabsichtigten Be- oder Entladung des Fahrzeuges, das berechnete Geschwindigkeitsprofil ungenau wird.

In DE 10 2008 039 950 B4 ist weiterhin ein Verfahren zum Ermitteln eines Fahrprofils gezeigt. Hierbei wird eine Fahrtroute festgelegt, die abgefahren werden soll, und die aktuelle Position des Fahrzeuges ermittelt. Für die Fahrtroute bzw. einen Teil der Fahrtroute wird in einem Modell ein Geschwindigkeitsprofil insbesondere in Abhängigkeit einer Topographie sowie Eigenschaften einer Antriebseinrichtung, beispielsweise ein Beschleunigungspotential, ermittelt, um eine Verbrauchsoptimierung zu erreichen. Weiterhin kann eine Beschleunigung in einem Abstand vor dem Fahrzeug berechnet werden, um spritsparend beispielsweise eine Steigung überwinden zu können.

Die US 20120283928 A betrifft ein Verfahren zum Regeln einer Übergeschwindigkeit und einer Untergeschwindigkeit eines Fahrzeuges mit einer Geschwindigkeitsregelanlage während eines Gefälles oder einer Steigung. Dabei werden die Fahrzeuggeschwindigkeit und eine Fahrzeugmasse ermittelt und die Bremsen und der Antrieb derartig eingestellt, dass eine Übergeschwindigkeit oder eine Untergeschwindigkeit minimiert werden können.

Die DE 10 2009 022 170 A1 betrifft ein Verfahren zur Begrenzung der Fahrzeuggeschwindigkeit in Abhängigkeit einer auf das Fahrzeug wirkenden Zentripetalkraft. Dazu wird von einer Erfassungseinheit eine im Erfassungsbereich liegende Kurve erkannt und für den Erfassungsbereich insbesondere in Abhängigkeit einer Fahrzeugmasse und der Fahrzeuggeschwindigkeit eine auf das Fahrzeug wirkende Zentripetalkraft bestimmt. Ist diese zu hoch, wird die Fahrzeuggeschwindigkeit reduziert.

In DE 10 2012 214 827A1 ist ein Verfahren beschrieben, bei dem das Fahrzeug in Abhängigkeit eines Ladungsparameters und von Streckeninformationen, die für einen zu durchfahrenden Straßenabschnitt vorab bestimmt werden, gesteuert wird.

Die US 2014/0277835 A1 offenbart Systeme und Verfahren zur Optimierung des Energieverbrauchs eines Fahrzeugs mittels Dynamischer Programmierung während des Befahrens eines aus Straßensegmenten bestehenden Fahrweges. Ein zumindest teilweise außerhalb des Fahrzeugs befindlicher Geschwindigkeitsprofil-Generator berechnet unter Verwendung eines Energieverbrauchsmodells des Fahrzeugs zusammen mit Straßenzustandsdaten des Fahrweges ein optimales Geschwindigkeitsprofil. Das Geschwindigkeitsprofil gibt für Orte entlang des Fahrweges jeweils Sollgeschwindigkeiten so vor, dass der Fahrweg mit optimalem Energieverbrauch zurückgelegt wird. Der Geschwindigkeitsprofil-Generator vergleicht den Energieverbrauch für verschiedene mögliche Trajektorien im Geschwindigkeitsprofil zwischen einer Minimaltrajektorie und einer Maximaltrajektorie.

Es ist Aufgabe der Erfindung, ein Verfahren für eine adaptive Regelung einer Fahrzeuggeschwindigkeit bereitzustellen, mit der eine spritsparende Fahrweise zuverlässig erreicht werden kann, wobei insbesondere die Rechenzeit und der Rechenaufwand zu reduzieren sind, um im Fahrzeug eine schnelle und kostengünstige Datenverarbeitung zu ermöglichen. Weiterhin ist Aufgabe der Erfindung, eine Geschwindigkeitsregelanlage zur Durchführung des Verfahrens bereitzustellen.

Diese Aufgabe wird durch ein Verfahren nach Anspruch 1 sowie eine Geschwindigkeitsregelanlage nach Anspruch 12 und ein Fahrzeug nach Anspruch 13 gelöst. Bevorzugte Weiterbildungen sind in den abhängigen Ansprüchen angegeben. Erfindungsgemäß ist demnach vorgesehen, eine aktuelle Fahrzeuggeschwindigkeit eines Fahrzeuges an eine vom Fahrer vorgegebene Referenzgeschwindigkeit anzupassen, wobei dazu aufwendige Rechenoperationen auf eine externe Recheneinheit, vorzugsweise eine Cloud, ausgelagert werden. Hierbei wird auf mindestens einen Berechnungskoeffizienten zurückgegriffen, der auf der externen Recheneinheit in Abhängigkeit von fahrdynamischen Fahrzeug-Parametern sowie in Abhängigkeit von aktuellen Streckeninformationen hergeleitet wird. Mit dem mindestens einen Berechnungskoeffizienten kann beispielsweise in einem Steuergerät einer erfindungsgemäßen Geschwindigkeitsregelanlage eine Fahrzeug-Soll-Geschwindigkeit und/oder eine Fahrzeug-Soll-Verzögerung bestimmt werden, mit der die aktuell vorliegende Fahrzeuggeschwindigkeit angepasst wird, um die Referenzgeschwindigkeit zu erreichen, wobei eine spritsparende Fahrweise angestrebt wird. Die Fahrzeug-Soll-Verzögerung kann hierbei positiv oder negativ sein, wobei dies erreicht wird, indem beispielsweise ein Antrieb des Fahrzeuges mit einem entsprechenden Antriebsmoment angesteuert wird oder Bremsanlagen des Fahrzeuges mit entsprechenden Bremsmomenten, so dass die Fahrzeuggeschwindigkeit erhöht (Fahrzeug-Soll-Verzögerung positiv) bzw. reduziert (Fahrzeug-Soll-Verzögerung negativ) wird.

Daraus ergibt sich bereits der Vorteil, dass keine hohen Anforderungen an die Leistungsfähigkeit des Steuergerätes in der Geschwindigkeitsregelanlage im Fahrzeug zu stellen sind, da aufwendige Rechenoperationen, d.h. insbesondere die Bestimmung des mindestens einen Berechnungskoeffizienten, zur Bestimmung der Fahrzeug-Soll-Geschwindigkeit und/oder der Fahrzeug-Soll-Verzögerung auf die externe Recheneinheit ausgelagert werden. Die externe Recheneinheit ist hierbei über ein Netzwerk drahtlos, beispielsweise über eine Funkverbindung, insbesondere eine Mobilfunkverbindung, beispielsweise in das Internet, erreichbar und die Infrastruktur der externen Recheneinheit erlaubt es, parallel zueinander aufwendige Rechenoperationen, z.B. Simulationen, durchzuführen, wobei die externe Recheneinheit, die beispielsweise nach Art des Cloud-Computing arbeitet, von allen Fahrzeugen mit einem erfindungsgemäßen adaptiven Regelsystem erreichbar ist. Eine derartig leistungsstarke Infrastruktur außerhalb des Fahrzeuges aufzubauen, ist wesentlich einfacher und kostensparender, da nicht in jedem Fahrzeug eine kostenintensive Recheneinheit installiert, gewartet und aktualisiert werden muss.

Als fahrdynamische Fahrzeug-Parameter werden erfindungsgemäß eine aktuelle Position des Fahrzeuges, eine aktuelle Fahrzeugmasse, eine aktuelle Fahrzeuggeschwindigkeit, ein aktuell maximal verfügbares Antriebsmoment und ein aktuell maximal verfügbares Bremsmoment verstanden, durch die eine aktuell vorliegende Fahrdynamiksituation des Fahrzeuges definiert werden kann; d.h. z.B.: wie schnell kann das Fahrzeug an der derzeitigen Position von der aktuellen Fahrzeuggeschwindigkeit ausgehend abgebremst oder beschleunigt werden.

Dies hat bereits den Vorteil, dass für die adaptive Regelung der Fahrzeuggeschwindigkeit aktuell vorliegende Fahrzeug-Parameter berücksichtigt werden, so dass für die aktuelle Position auch bei einer Änderung der Fahrzeugmasse, beispielsweise nach einer zwischenzeitlichen Be- oder Entladung, oder einer Abweichung der Fahrzeuggeschwindigkeit vom geplanten Geschwindigkeitsprofil eine zuverlässige adaptive Anpassung der Fahrzeug-geschwindigkeit zum Erreichen einer spritsparenden Fahrweise ermöglicht wird. Die Fahrzeug-Parameter werden dazu im Fahrzeug bestimmt und ständig, beispielsweise auch in Abhängigkeit der Fahrzeuggeschwindigkeit, an die externe Recheneinheit übermittelt, so dass der mindestens eine Berechnungskoeffizient anhand der aktuellen fahrdynamischen Fahrzeug-Parameter ermittelt werden kann.

Zum Berechnen der Fahrzeug-Soll-Geschwindigkeit wird in der Geschwindigkeitsregelanlage dann erfindungsgemäß das aktuell maximal verfügbare Bremsmoment mit einem ersten Berechnungskoeffizienten, die aktuelle Fahrzeugmasse mit einem zweiten Berechnungskoeffizienten und/oder das aktuell maximal verfügbare Antriebsmoment mit einem dritten Berechnungskoeffizienten gewichtet, so dass im Steuergerät nur noch eine einfache Rechenoperation, beispielsweise eine Multiplikation der einzelnen Faktoren stattfindet. Zusätzlich kann durch einen vierten Berechnungsfaktor eine weitere Streckeninformation berücksichtigt werden. Alternativ können auch lediglich einzelne Berechnungskoeffizienten zur Berechnung der Fahrzeug-Soll-Geschwindigkeit herangezogen werden, beispielsweise wenn ein bestimmter Fahrzeug-Parameter im Fahrzeug nicht verfügbar ist.

Erfindungsgemäß werden beim Ermitteln des mindestens einen Berechnungskoeffizienten aktuell vorliegende Streckeninformationen in einem der Position des Fahrzeuges vorausliegenden Streckenabschnitt berücksichtigt, die beispielsweise in einem Kartensystem auf der externen Recheneinheit gespeichert sind. Als Streckeninformationen werden beispielsweise eine Topographie, d.h. eine Steigung, ein Gefälle oder eine Kurve, aber auch Geschwindigkeitsbegrenzungen oder eine Verkehrsinformation, wie z.B. ein Stau, stockender/zähflüssiger Verkehr oder sich vor Kreuzungen, Ampeln oder dgl. befindender Verkehr und/oder ggf. unter Berücksichtigung der Ampelschaltphasen, verstanden.

Somit kann bei der Ermittlung des mindestens einen Berechnungskoeffizienten in der externen Recheneinheit auch die Topographie an der aktuellen Position und in dem vorausliegenden Streckenabschnitt vor dem Fahrzeug oder ein vorausliegender Stau einbezogen werden. Vorteilhafterweise können diese Streckeninformationen aktuell gehalten werden, indem die externe Recheneinheit bzw. das Kartensystem bei Änderungen in den aktuellen Streckeninformationen aktualisiert wird. Dadurch können auf dem Fahrzeug zusätzlich Rechenaufwand und Speicherkapazität gespart werden, denn es ist nicht nötig, das Steuergerät des Fahrzeuges zu aktualisieren und aktuelle Topographien zu speichern, sondern lediglich auf der externen Recheneinheit. Da die externe Recheneinheit von allen Fahrzeugen mit einem erfindungsgemäßen adaptiven Regelsystem erreichbar ist, sind die aktuellen Streckeninformationen lediglich an einer zentralen Stelle zu aktualisieren, wodurch Aktualisierungsaufwand gespart werden kann. Somit werden auch die Berechnungskoeffizienten ständig aktuell gehalten, so dass ein spritsparendes Fahrverhalten auch bei aktuell auftretenden Ereignissen, insbesondere aktuelle Verkehrsinformationen wie z.B. einem neuen Stau, beibehalten werden kann.

Vorzugsweise ist auf der externen Recheneinheit ein Algorithmus zum Herleiten des mindestens einen Berechnungskoeffizienten vorgesehen, wobei der Algorithmus den mindestens einen Berechnungskoeffizienten insbesondere für bestimmte Positionen im Kartensystem vorausbestimmt. Dazu können durch den Algorithmus beispielsweise an den einzelnen Positionen im Kartensystem Simulationen für verschiedene Fahrzeug-Soll-Geschwindigkeiten und/oder Fahrzeug-Soll-Verzögerungen in Abhängigkeit von unterschiedlichen Werten für die fahrdynamischen Fahrzeug-Parameter sowie von unterschiedlichen Werten für den vorausliegenden Streckenabschnitt durchgeführt werden und aus den Simulationen der Berechnungskoeffizient mit dem geringsten Spritverbrauch für die entsprechende Position hergeleitet werden. Dieser Berechnungskoeffizient wird dann zusammen mit den entsprechenden Werten der fahrdynamischen Fahrzeug-Parameter und dem Wert für den Streckenabschnitt im Kartensystem für die entsprechende Position abgespeichert.

Übermittelt ein an einer entsprechenden Position fahrendes Fahrzeug fahrdynamische Fahrzeug-Parameter an die externe Recheneinheit, kann die externe Recheneinheit dann die für diese Position gespeicherten oder mit den neu übermittelten fahrdynamischen Fahrzeug-Parametern ermittelten Berechnungskoeffizienten für diese fahrdynamischen Fahrzeug-Parameter an das Steuergerät der Geschwindigkeitsregelanlage in diesem Fahrzeug zurücksenden, das dann mit einfachen Rechenoperationen die Fahrzeug-Soll-Geschwindigkeit und/oder die Fahrzeug-Soll-Verzögerung berechnet und einen Motor und/oder Bremsen und/oder ein Getriebe des Fahrzeuges ansteuert, um die aktuelle Fahrzeuggeschwindigkeit in entsprechender Weise an die Fahrzeug-Soll-Geschwindigkeit anzupassen.

Zum Berechnen der Fahrzeug-Soll-Verzögerung kann in der Geschwindigkeitsregelanlage beispielsweise ebenfalls eine Gewichtung des maximal verfügbaren Bremsmomentes und/oder des maximal verfügbaren Antriebsmomentes und/oder der Fahrzeugmasse mit den entsprechend übermittelten Berechnungskoeffizienten stattfinden, die auf der externen Recheneinheit ermittelt wurden, so dass lediglich einfache Rechenoperationen auf dem Steuergerät im Fahrzeug durchzuführen sind.

Alternativ können die Berechnungskoeffizienten auch anhand von Erfahrungswerten vom Algorithmus hergeleitet werden. Fährt beispielsweise ein Fahrzeug, das Zugriff auf die externe Recheneinheit hat, mit einer spritsparenden Fahrzeuggeschwindigkeit entlang eines Streckenabschnittes, so können die fahrdynamischen Fahrzeug-Parameter dieses Fahrzeuges zusammen mit den der spritsparenden Fahrzeuggeschwindigkeit entsprechenden Berechnungskoeffizienten vom Algorithmus ermittelt und für die entsprechenden Positionen im Kartensystem abgespeichert werden. Somit kann ein Fahrzeug mit ähnlichen fahrdynamischen Fahrzeug-Parametern ebenfalls auf diese Berechnungskoeffizienten zurückgreifen.

Somit findet eine Trennung von einfachen Rechenoperationen, beispielsweise einfache Multiplikationen oder Additionen, und aufwändigen Rechenoperationen, beispielsweise Simulationen, statt, wobei einfache Rechenoperationen in dem Steuergerät des Fahrzeugs durchgeführt werden können und aufwändige Rechenoperationen auf die externe Recheneinheit mit einer leistungsstarken Infrastruktur ausgelagert werden. Alternativ können auch alle Rechenoperationen auf die externe Recheneinheit ausgelagert werden. Damit der externen Recheneinheit kein unnötiger Rechenaufwand übertragen wird, werden die einfachen Rechenoperationen, die auch in dem Fahrzeug durchgeführt werden können, vorteilhafterweise an das Steuergerät im jeweiligen Fahrzeug übertragen.

Um die externe Recheneinheit weiterhin zu entlasten, ist es vorteilhaft, die Fahrzeug-Soll-Geschwindigkeit und/oder die Fahrzeug-Soll-Verzögerung bzw. die Berechnungskoeffizienten von dem Algorithmus lediglich für einen bestimmten vorausliegenden Streckenabschnitt bestimmen zu lassen, wobei der vorausliegende Streckenabschnitt insbesondere in Abhängigkeit einer aktuell vorliegenden kinetischen Energie des Fahrzeugs, die sich aus der aktuellen Fahrzeugmasse und der aktuellen Fahrzeuggeschwindigkeit ergibt, ermittelt wird.

Dadurch kann vorteilhafterweise berücksichtigt werden, dass ein Fahrzeug mit einer höheren kinetischen Energie, d.h. mit einer höheren Fahrzeugmasse und/oder einer höheren Fahrzeuggeschwindigkeit beispielsweise einen längeren Bremsweg oder einen längeren Beschleunigungsweg aufweist und somit ein längerer vorausliegender Streckenabschnitt zu berücksichtigen ist zur spritsparenden Berechnung der Fahrzeug-Soll-Geschwindigkeit und/der der Fahrzeug-Soll-Verzögerung. Bei einem leichteren Fahrzeug hingegen ist ein kürzerer vorausliegender Streckenabschnitt relevant, da das Fahrzeug eine geringere kinetische Energie bei gleicher Fahrzeuggeschwindigkeit aufweist und somit schneller abgebremst oder beschleunigt werden kann.

Vorteilhafterweise kann dadurch die Berechnung auf der externen Recheneinheit durch den Algorithmus effizienter gestaltet werden, da der Algorithmus lediglich Streckeninformationen bei der Berechnung der Fahrzeug-Soll-Geschwindigkeit und/oder der Fahrzeug-Soll-Verzögerung verwendet, die tatsächlich benötigt werden. Somit kann eine zuverlässige adaptive Regelung der Fahrzeuggeschwindigkeit stattfinden, wobei der Rechenaufwand und die Rechenzeit optimiert werden. Zudem werden auf der externen Recheneinheit keine unnötigen Daten übertragen und verarbeitet, da nur die Daten bereitgestellt werden, die auch relevant sind, so dass die zu verarbeitende Datenmenge begrenzt wird und somit insgesamt Ressourcen gespart werden können.

Vorteilhafterweise können auch die fahrdynamischen Fahrzeug-Parameter, maximal verfügbares Antriebsmoment und maximal verfügbares Bremsmoment, bei der Festlegung des vorlausliegenden Streckenabschnittes berücksichtigt werden. Dadurch kann beispielsweise ein vor dem Fahrzeug liegender Streckenabschnitts-Startpunkt des Streckenabschnittes festgelegt werden, der berücksichtigt, wie schnell das Fahrzeug auf eine Veränderung in der Fahrzeuggeschwindigkeit reagieren kann, d.h. wie schnell eine Abbremsung und ein Beschleunigen möglich ist. Dies hat auch Auswirkungen auf einen Streckenabschnitts-Endpunkt, bis zu dem der vorausliegende Streckenabschnitt vom Streckenabschnitts-Startpunkt ausgedehnt ist. Denn ein Fahrzeug mit einer hohen kinetischen Energie und einem geringen maximal verfügbaren Bremsmoment bzw. Antriebsmoment weist einen längeren Bremsweg bzw. Beschleunigungsweg auf als ein Fahrzeug mit derselben kinetischen Energie aber höherem maximal verfügbaren Bremsmoment bzw. Antriebsmoment.

Somit kann anhand der fahrdynamischen Fahrzeug-Parameter ein Streckenabschnitt ermittelt werden, für den mit geringem Rechenaufwand und optimaler Rechenzeit eine zuverlässige spritsparende Regelung der Fahrzeuggeschwindigkeit erreicht werden kann. Indem auf aktuell vorliegende Fahrzeug-Parameter zurückgegriffen wird, kann der Streckenabschnitt zudem sehr genau an die tatsächlich vorliegende Fahrzeugdynamik angepasst werden, um somit auf eine vorausliegende Streckeninformation, beispielsweise einen neu entstandenen Stau oder eine Geschwindigkeitsbegrenzung, auch zuverlässig reagieren zu können.

Der vorausliegende Streckenabschnitt kann hierbei weiterhin abhängig von einer vom Fahrer vorgegebenen Fahrtroute sein, so dass nicht jeder erdenkliche Streckenabschnitt betrachtet wird, sondern lediglich Streckenabschnitte auf der geplanten Fahrtroute. Dies kann beim Bereitstellen der Berechnungskoeffizienten durch die externe Recheneinheit vorteilhafterweise ebenfalls berücksichtigt werden, indem lediglich Berechnungskoeffizienten für einen bestimmten, auf der Fahrtroute liegenden Streckenabschnitt ausgegeben werden.

Bei der Bestimmung der Berechnungskoeffizienten für den vorausliegenden Streckenabschnitt kann indirekt auch eine Änderung der Fahrzeuggeschwindigkeit festgelegt werden, d.h. ab wann ein vorausliegendes Ereignis für das Fahrzeug in Abhängigkeit der fahrdynamischen Parameter relevant ist. Liegt beispielsweise eine Geschwindigkeitsbegrenzung auf einer Steigung nach einem Gefälle vor, wird eine Abbremsung des Fahrzeuges und somit eine Änderung der Fahrzeuggeschwindigkeit bzw. der Berechnungskoeffizienten anders erfolgen als bei einer Geschwindigkeitsbegrenzung auf einer Steigung nach einer ebenen oder leicht ansteigenden Fahrbahn. Es kann also in Abhängigkeit der Streckeninformationen ebenfalls geregelt werden, wie schnell die Fahrzeug-Soll-Geschwindigkeit ausgehend von der aktuell vorliegenden Fahrzeuggeschwindigkeit erreicht werden soll, wobei dies durch den Algorithmus ebenfalls berücksichtigt wird.

Bei der Ansteuerung der Bremsen und/oder des Motors und/oder des Getriebes zur spritsparenden Durchsetzung der Fahrzeug-Soll-Geschwindigkeit und/oder der Fahrzeug-Soll-Verzögerung kann weiterhin eine obere und eine untere Grenzgeschwindigkeit berücksichtigt werden, die beispielsweise vom Fahrer vorgegeben oder aber automatisch festgelegt werden kann. Dadurch kann vorteilhafterweise eingestellt werden, innerhalb welcher Geschwindigkeitsgrenzwerte die Fahrzeuggeschwindigkeit eingeregelt werden soll. Als obere Grenzgeschwindigkeit kann beispielsweise vom Fahrer eine Höchstgeschwindigkeit des Fahrzeuges oder von der externen Recheneinheit automatisch eine Geschwindigkeitsbegrenzung vorgegeben werden. Die untere Grenzgeschwindigkeit kann abhängig von der oberen Grenzgeschwindigkeit oder der Fahrzeugkonfiguration sowie von einer Mindestgeschwindigkeit, die beispielsweise durch eine Fahrtzeit oder einen Fahrtstreckenabschnitt, wie z.B. einer Autobahn mit einer Mindest- oder Richtgeschwindigkeit, bestimmt ist, innerhalb derer der Fahrer sein Ziel erreichen möchte, festgelegt werden.

Insbesondere können die oberen und die untere Grenzgeschwindigkeit auch vom Algorithmus berücksichtigt werden, so dass diese bei der Ermittlung der Berechnungskoeffizienten ebenfalls eine Rolle spielen, um auch in Abhängigkeit davon eine spritsparende Fahrzeug-Soll-Geschwindigkeit und/oder Fahrzeug-Soll-Verzögerung vorgeben zu können.

Die Erfindung wird im Folgenden anhand der beiliegenden Zeichnungen erläutert. Es zeigen:

Fig. 1 ein Fahrzeug mit einem elektronisch gesteuerten pneumatischen Bremssystem als Blockschaltbild;

Fig. 2 ein beispielhaftes Geschwindigkeitsprofil;

Fig. 3a, b beispielhafte Streckenabschnitte; und

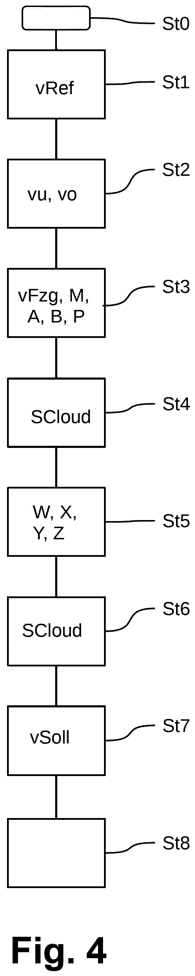

Fig. 4 ein Flussdiagramm zur Durchführung des Verfahrens.

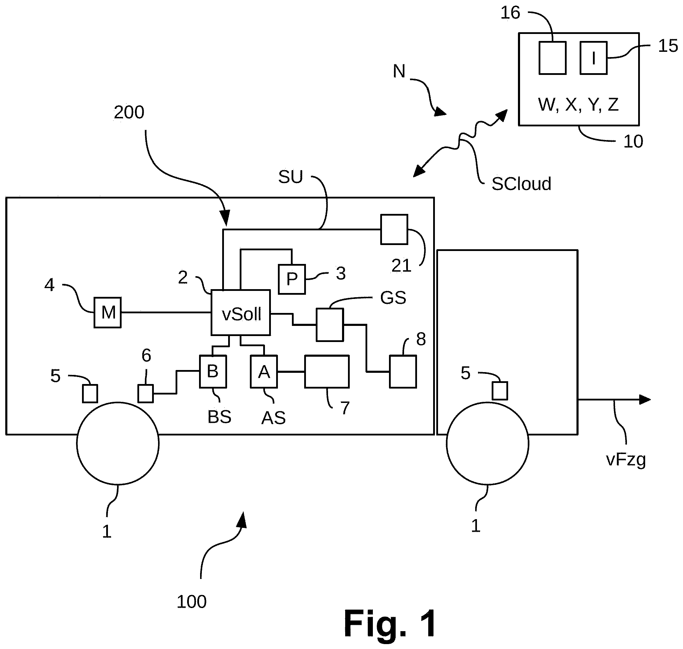

Die Ausführungsform gemäß Fig. 1 betrifft ein Fahrzeug 100, beispielsweise ein Nutzfahrzeug, mit einem erfindungsgemäßen Steuergerät 2 zum adaptiven Regeln einer Fahrzeuggeschwindigkeit vFzg, das Teil einer Geschwindigkeitsregelanlage 200, auch als Tempomat bekannt, ist. Das Steuergerät 2 ist hierbei mit einem Positionsbestimmungssystem 3, beispielsweise einem Global Positioning System (GPS) verbunden, das eine aktuelle Position P des Fahrzeuges 100 an das Steuergerät 2 übermittelt. Weiterhin ist in dem Steuergerät 2 eine aktuelle Fahrzeugmasse M des Fahrzeuges 100 hinterlegt. Die Fahrzeugmasse M kann hierbei entweder vorab ermittelt und eingespeichert werden oder aber mit einem Massebestimmungssystems 4, beispielsweise einem Achslastsensor oder einer elektronischen Luftfederungsanlage, ständig ermittelt und an das Steuergerät 2 übermittelt werden, um beispielsweise bei einer Änderung der Beladung des Fahrzeuges 100 eine aktuelle Fahrzeugmasse M ermitteln zu können.

Zudem sind im Steuergerät 2 ein aktuell maximal verfügbares Antriebsmoment A sowie ein aktuell maximal verfügbares Bremsmoment B des Fahrzeuges 100 hinterlegt, die vom Antriebssteuergerät AS bzw. Bremssteuergerät BS an das Steuergerät 2 ausgegeben werden können und die angeben, mit welchem Antriebsmoment A bzw. mit welchem Bremsmoment B das Fahrzeug 100 maximal positiv beschleunigt bzw. maximal abgebremst werden kann. Darüber kann ein Fahrdynamikverhalten des Fahrzeuges 100 abgeschätzt bzw. eine Fahrdynamiksituation definiert werden. Außerdem wird die aktuelle Fahrzeuggeschwindigkeit vFzg des Fahrzeuges 100 erfasst, beispielsweise mit an Rädern 1 des Fahrzeuges 100 angeordneten Raddrehzahlsensoren 5. Alternativ kann die aktuelle Fahrzeuggeschwindigkeit vFzg auch aus der Änderung der vom Positionsbestimmungssystem 3 ermittelten Positionen P oder den Sensorsignalen SU mindestens eines Fahrzeug-Umfeld-Sensors 21, wie z.B. eines Radar-/LIDAR-Sensors oder einer Kamera, der Geschwindigkeitsregelanlage 200, insbesondere dem Steuergerät 2, hergeleitet werden.

Gemäß der Erfindung wird die Fahrzeuggeschwindigkeit vFzg in der Geschwindigkeitsregelanlage 200 adaptiv geregelt. Dazu wird vom Steuergerät 2 zunächst eine Fahrzeug-Soll-Geschwindigkeit vSoll und/oder eine Fahrzeug-Soll-Verzögerung zSoll berechnet. Anschließend werden über das Bremssteuergerät BS Bremsen 6 und/oder über das Antriebssteuergerät AS ein Motor 7 und/oder über eine Getriebesteuerung GS ein Getriebe 8 des Fahrzeuges 100 derartig angesteuert, dass sich die Fahrzeuggeschwindigkeit vFzg an die Fahrzeug-Soll-Geschwindigkeit vSoll ggf. mit der vorgegebenen Fahrzeug-Soll-Verzögerung zSoll angleicht. Die adaptive Regelung der Fahrzeuggeschwindigkeit vFzg funktioniert hierbei nach Art einer Geschwindigkeitsregelanlage 200, die durch Ansteuerung der Bremsen 6 und/oder des Motors 7 und/oder des Getriebes 8 versucht, eine Referenzgeschwindigkeit vRef beizubehalten.

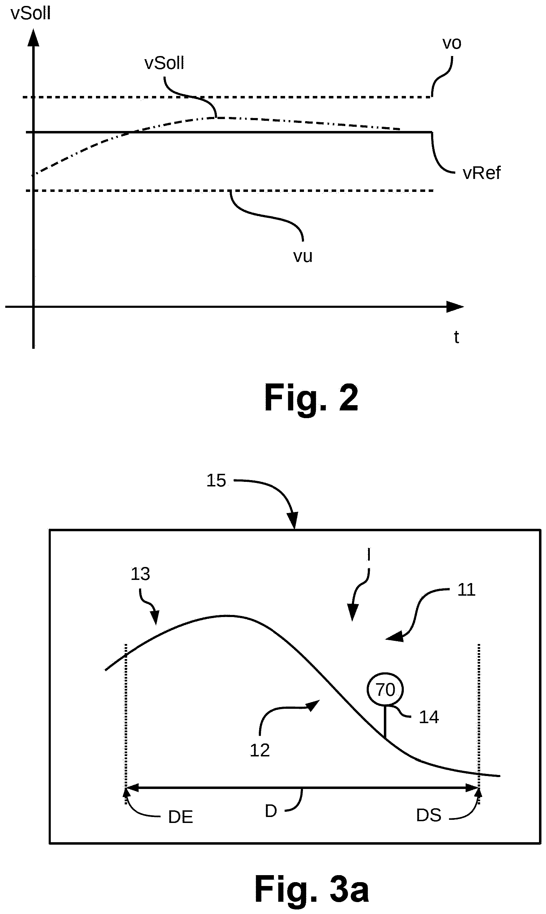

Die Referenzgeschwindigkeit vRef wird hierbei vom Fahrer vorgegeben. Zusätzlich werden eine obere Grenzgeschwindigkeit vo und eine untere Grenzgeschwindigkeit vu vorgegeben. Die adaptive Regelung der Fahrzeuggeschwindigkeit vFzg im Steuergerät 2 gibt dann zum Anpassen der Fahrzeuggeschwindigkeit vFzg an die Referenzgeschwindigkeit vRef eine Fahrzeug-Soll-Geschwindigkeit vSoll, die zwischen der oberen Grenzgeschwindigkeit vo und der unteren Grenzgeschwindigkeit vu liegt, und/oder eine Fahrzeug-Soll-Verzögerung zSoll vor. Die Berechnung der Fahrzeug-Soll-Geschwindigkeit vSoll und/oder der Fahrzeug-Soll-Verzögerung zSoll erfolgt hierbei adaptiv, d.h. gemäß der Erfindung wird die Fahrzeug-Soll-Geschwindigkeit vSoll innerhalb der oberen Grenzgeschwindigkeit vo und der unteren Grenzgeschwindigkeit vu derartig eingestellt, dass für einen vorausliegenden Streckenabschnitt D ein möglichst geringer Spritverbrauch erreicht werden kann. D.h. es wird nicht gezwungenermaßen sofort die Referenzgeschwindigkeit vRef als Fahrzeug-Soll-Geschwindigkeit vSoll eingestellt, sondern eine Fahrzeug-Soll-Geschwindigkeit vSoll innerhalb der Geschwindigkeitsgrenzwerte vo, vu gewählt, die sich ggf. unter Berücksichtigung der Fahrzeug-Soll-Verzögerung zSoll möglichst spritsparend an die vorgegebene Referenzgeschwindigkeit vRef annähert. Ein beispielhafter Verlauf der Geschwindigkeiten vu, vo, vRef, vSoll ist hierbei in Fig. 2 in Abhängigkeit über einen Zeit t angegeben.

Die Berechnung der Fahrzeug-Soll-Geschwindigkeit vSoll sowie der Fahrzeug-Soll-Verzögerung zSoll erfolgt gemäß der dargestellten Ausführungsform folgendermaßen:
Das Steuergerät 2 übermittelt als Fahrzeug-Parameter insbesondere die aktuelle Position P des Fahrzeuges 100, die aktuelle Fahrzeuggeschwindigkeit vFzg, die aktuelle Fahrzeugmasse M des Fahrzeuges 100, das maximal verfügbare Antriebsmoment A sowie das maximal verfügbare Bremsmoment B drahtlos, beispielsweise mittels einer Mobilfunkverbindung, über ein Cloud-Signal SCloud an eine externe Recheneinheit 10. Durch die Fahrzeug-Parameter vFzg, A, B, M, P kann insbesondere die aktuelle Fahrdynamiksituation des Fahrzeugs 100 charakterisiert werden, d.h. wie schnell kann das Fahrzeug 100 mit der Fahrzeugmasse M von der aktuellen Fahrzeuggeschwindigkeit vFzg abgebremst oder beschleunigt werden.

Die externe Recheneinheit 10 arbeitet hierbei nach dem Prinzip des Cloud-Computing, d.h. das Steuergerät 2 sendet alle fahrdynamischen Fahrzeug-Parameter vFzg, A, B, M, P des Fahrzeugs 100, die es selbst aktuell bestimmen kann und die für eine Berechnung der Fahrzeug-Soll-Geschwindigkeit vSoll und/oder der Fahrzeug-Soll-Verzögerung zSoll benötigt werden, drahtlos beispielsweise mittels einer Mobilfunkverbindung oder dgl. über ein Netzwerk N, beispielsweise das Internet, an die externe Recheneinheit 10. Diese kann in deren Infrastruktur umfangreiche und komplexe Rechenoperationen durchführen und kann das Ergebnis dieser Rechenoperationen über das Netzwerk N drahtlos zurück an das Steuergerät 2 übermitteln. Auf dem Steuergerät 2 werden, wenn überhaupt, nur noch einfache Rechenoperationen durchgeführt, um die Fahrzeug-Soll-Geschwindigkeit vSoll und/oder die Fahrzeug-Soll-Verzögerung zSoll zu erhalten, oder das Ergebnis direkt zur Ansteuerung der Bremsen 6 und/oder des Motors 7 und/oder des Getriebes 8 verwendet.

Die externe Recheneinheit 10 übermittelt gemäß diesem Ausführungsbeispiel anhand der aktuell vorliegenden Fahrzeug-Parameter P, vFzg, M, A, B Berechnungskoeffizienten W, X, Y, Z an das Steuergerät 2, wobei die Berechnungskoeffizienten W, X, Y, Z maßgeblich sind für eine Berechnung der einzuregelnden Fahrzeug-Soll-Geschwindigkeit vSoll wobei gemäß dieser Ausführung beispielsweise gilt:

$$vSoll = W \cdot B + X \cdot M + Y \cdot A + Z$$

Ein erster Berechnungskoeffizient W gewichtet in dem Fall das maximal verfügbare Bremsmoment B, ein zweiter Berechnungskoeffizient X die aktuelle Fahrzeugmasse M des Fahrzeuges 100 und ein dritter Berechnungskoeffizient Y das maximal verfügbare Antriebsmoment A. Im Falle einer Geschwindigkeitsbegrenzung 14 entspricht ein vierter Berechnungskoeffizient Z gleich dem Wert der Geschwindigkeitsbegrenzung 14. Bei Vorliegen einer Geschwindigkeitsbegrenzung 14 kann die obere Grenzgeschwindigkeit vo auf den Wert der Geschwindigkeitsbegrenzung 14 abgesenkt werden, so dass für die Fahrzeug-Soll-Geschwindigkeit vSoll nur noch Werte zugelassen sind, die kleiner sind als die obere Grenzgeschwindigkeit vo. Gleichzeitig kann auch eine dazu proportionale Absenkung der unteren Grenzgeschwindigkeit vu stattfinden, so dass eine spritsparende Regelung innerhalb der Grenzgeschwindigkeiten vu, vo ermöglicht wird. Alternativ können der erste, zweite und/oder dritte Berechnungskoeffizient W, X, Y aber auch auf null gesetzt werden, so dass die Fahrzeuggeschwindigkeit vFzg zumindest innerhalb der Geschwindigkeitsbegrenzung auf dem Wert der Geschwindigkeitsbegrenzung 14 gehalten wird.

Die Berechnungskoeffizienten W, X, Y, Z sind hierbei für jede Position P des Fahrzeuges 100 und für die entsprechenden Fahrzeug-Parameter vFzg, M, A, B beispielsweise in der externen Recheneinheit 10 in einem Kartensystem 15 gespeichert. Dem Kartensystem 15 bereitgestellt werden können die Berechnungskoeffizienten W, X, Y, Z für jede Position P mit einem auf der externen Recheneinheit 10 ausführbaren Algorithmus 16. Der Algorithmus 16 leitet aus Streckeninformationen I im vor dem Fahrzeug 100 liegenden Streckenabschnitt D, die im Kartensystem 15 gespeichert sind, die Berechnungskoeffizienten W, X, Y, Z ab. Dazu werden von dem Algorithmus 16 in der externen Steuereinheit 10 Spritverbräuche für unterschiedliche Berechnungskoeffizienten W, X, Y, Z und feste Fahrzeug-Parameter vFzg, A, B, M, P simuliert und dann die Berechnungskoeffizienten W, X, Y, Z für den geringsten Spritverbrauch für diese Position P gespeichert. Alternativ kann die externe Recheneinheit 10 auch auf Erfahrungswerte zurückgreifen, indem der Algorithmus den Spritverbrauch von Fahrzeugen 100 überwacht, die bereits an dieser Position P unterwegs waren und aus deren Spritverbrauch einen optimalen Spritverbrauch herausfiltert. Aus der Fahrzeug-Soll-Geschwindigkeit vSoll dieses Fahrzeuges 100 können dann die Berechnungskoeffizienten W, X, Y, Z bestimmt und für diese Position P gespeichert werden.

Übermittelt ein beliebiges Fahrzeug 100 Fahrzeug-Parameter vFzg, A, B, M, P über das Cloud-Signal SCloud an die externe Recheneinheit 10, kann diese dann die entsprechend für die Position P gespeicherten Berechnungskoeffizienten W, X, Y, Z an das Steuergerät 2 der Geschwindigkeitsregelanlage 200 zurückschicken. Das Steuergerät 2 kann dann anhand der Berechnungskoeffizienten W, X, Y, Z nach obiger Formel ohne großen Rechenaufwand die Fahrzeug-Soll-Geschwindigkeit vSoll berechnen und entsprechend eine Motor-, Brems- und/oder Getriebeanforderung veranlassen.

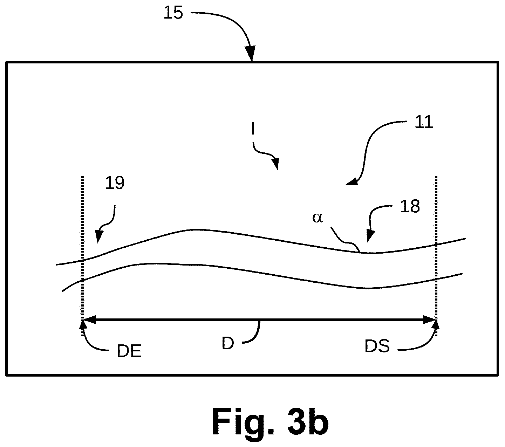

Als Streckeninformationen I werden hierbei eine Topographie 11, d.h. beispielsweise eine Steigung 12, ein Gefälle 13, Kurven 18 mit einem Kurvenradius $\alpha$ oder Streckenverengungen 19, aber auch Geschwindigkeitsbegrenzungen 14, Verkehrsinformationen 20, o.ä. berücksichtigt. Die Geschwindigkeitsbegrenzungen 14 sowie die Verkehrsinformationen 20 können auf der externen Recheneinheit 10 über beliebige Internetinformationsdienste 17 auf dem aktuellsten Stand gehalten werden, so dass bei der Berechnung der Fahrzeug-Soll-Geschwindigkeit vSoll beispielsweise sofort auf die Verkehrsinformation 20 reagiert werden kann. Die Topographie 11 kann von der externen Recheneinheit 10 aus dem Kartensystem 15 gewonnen werden, in dem der Streckenverlauf mit Höhenprofilen abgespeichert ist. Aus der Position P kann dann für den vorlausliegenden Streckenabschnitt D aus dem Kartensystem 15 die Topographie 11 ermittelt werden, wobei die Topographie 11 im Kartensystem 15 immer aktuell gehalten werden kann. Beispielhaft ist ein derartiger Streckenverlauf mit einem Streckenabschnitt D in den Figuren 3a und 3b dargestellt, wobei Fig. 3a eine Seitenansicht zeigt, die einen Höhenunterschied darstellt und Fig. 3b eine Draufsicht mit einer Kurve 18 und einer Streckenverengung 19.

Weiterhin kann der externen Recheneinheit 10 auch die obere Grenzgeschwindigkeit vo sowie die untere Grenzgeschwindigkeit vu mitgeteilt werden, so dass diese bei der Ermittlung der Berechnungskoeffizienten W, X, Y, Z für eine spritsparende Fahrweise berücksichtigt werden können.

Über die aktuelle Position P kann die externe Steuereinheit 10 bzw. der Algorithmus 16 beispielsweise zusätzlich berücksichtigen, wie weit die Geschwindigkeitsbegrenzung 14 noch entfernt ist und somit die Berechnungskoeffizienten W, X, Y langsam, insbesondere in Abhängigkeit der Topographie 11, beispielsweise einer Steigung 12 oder einem Gefälle 13, bis zum Eintreten der Geschwindigkeitsbegrenzung 14 auf null absenken, so dass quasi eine Änderung in der Fahrzeuggeschwindigkeit vFzg in Abhängigkeit davon eingestellt werden kann, wie schnell bzw. ab wann ein Ereignis im Streckenverlauf berücksichtigt werden soll, um kein abruptes Abbremsen oder Anfahren zu verursachen und somit Sprit zu sparen.

So kann die Gewichtung des maximal verfügbaren Antriebsmoments A bzw. der dritte Berechnungskoeffizient Y bei einem Gefälle 13 bereits früher auf null eingestellt werden als bei einer Steigung 12, da bei einem Gefälle 13 das maximal verfügbare Antriebsmoment A irrelevant ist. Das maximal verfügbare Bremsmoment B bzw. der erste Berechnungskoeffizient W ist bei einer Steigung 12 nicht relevant aber bei einem Gefälle 13. Die Fahrzeugmasse M hingegen ist sowohl bei einer Steigung 12 als auch bei einem Gefälle 13 relevant für ein spritsparendes Beschleunigen und Abbremsen, so dass der zweite Berechnungskoeffizient X größer als Null ist bis die Geschwindigkeitsbegrenzung 14 erreicht ist.

Die Algorithmus 16 berücksichtigt bei der Ermittlung der Berechnungskoeffizienten W, X, Y, Z beispielsweise auch, dass das Fahrzeug 100 ausgehend von seiner aktuellen Fahrzeuggeschwindigkeit vFzg mit seinem maximal verfügbaren Antriebsmoment A eine vorausliegende Steigung 12 oder ein Gefälle 13 dann mit einem minimalen Spritverbrauch überwindet, wenn eine Fahrzeug-Soll-Geschwindigkeit vSoll eingeregelt wird, die zwischen der oberen Grenzgeschwindigkeit vo und der unteren Grenzgeschwindigkeit vu liegt, wobei berücksichtigt wird, wie lang die vorausliegende Steigung 12 oder das Gefälle 13 ist und ob der vorausliegenden Steigung 12 ein Gefälle 13 bzw. ob dem Gefälle 13 eine Steigung 12 folgt. Beispielsweise kann die Fahrzeug-Soll-Geschwindigkeit vSoll kurz vor einer Kuppe der Steigung auf die untere Grenzgeschwindigkeit vu abgesenkt werden, wobei berücksichtigt wird, dass nach der Kuppe ein Gefälle 13 folgt, durch das das Fahrzeug 100 ohne eine Motoransteuerung auf die Referenzgeschwindigkeit vRef beschleunigt werden kann. Analog gilt dies für die Bremsansteuerung bei einem Übergang von einem Gefälle 13 in eine Steigung 12 oder eine Ebene, in der das Fahrzeug 100 durch Ausrollen von der oberen Grenzgeschwindigkeit vo auf die Referenzgeschwindigkeit vRef abgebremst werden kann, ohne dass eine Bremsansteuerung stattfindet.

Die obere Grenzgeschwindigkeit vo kann hierbei beispielsweise in Abhängigkeit einer Höchstgeschwindigkeit vmax des Fahrzeuges 100 oder aber einer möglicherweise vorliegenden Geschwindigkeitsbegrenzung 14 für den vorausliegenden Streckenabschnitt D festgelegt werden. Die untere Grenzgeschwindigkeit vu kann vom Fahrer festgelegt sein und berücksichtigen, wie schnell das Fahrzeug 100 sein Ziel erreichen soll. Weiterhin kann die untere Grenzgeschwindigkeit vu anhand der Fahrzeug-Parameter für das Antriebs- oder Bremsmoment bzw. der Fahrzeugmasse A, B, M oder in Abhängigkeit der vom Fahrer eingestellten oberen Grenzgeschwindigkeit vo festgelegt werden.

Der vorausliegende Streckenabschnitt D der vom Algorithmus 16 betrachtet wird, um die Berechnungskoeffizienten W, X, Y, Z zu bestimmen, ist gemäß einer Ausführungsform abhängig von einer aktuell vorliegenden kinetischen Energie $Ekin = M \cdot vFzg^2$ im Fahrzeug 100, d.h. von der aktuellen Fahrzeugmasse M und der aktuellen Fahrzeuggeschwindigkeit vFzg. Liegt ein Fahrzeug 100 mit einer hohen Fahrzeugmasse M und einer hohen Fahrzeuggeschwindigkeit vFzg vor, so ist mehr kinetische Energie Ekin im Fahrzeug 100 vorhanden, so dass beispielsweise für einen Bremsvorgang auch ein zurückgelegter (Brems-)Weg höher ist. Somit ist bei einem Fahrzeug 100 mit hoher kinetischer Energie Ekin auch ein größerer Streckenabschnitt D zu betrachten, innerhalb dessen durch eine Bremsansteuerung oder eine Motoransteuerung auf die Topographie 11, eine Verkehrsinformation 20 oder eine Geschwindigkeitsbegrenzung 14 zu reagieren ist. Bei einem Fahrzeug 100 mit einer geringeren Fahrzeugmasse M und einer geringen Fahrzeuggeschwindigkeit vFzg, kann schneller reagiert werden, so dass der Streckenabschnitt D kleiner gewählt werden kann.

Der Streckenabschnitt D wird hierbei durch ein Streckenabschnitts-Startpunkt DS und einen Streckenabschnitts-Endpunkt DE festgelegt, die beide ebenfalls von der kinetischen Energie Ekin sowie der fahrdynamischen Fahrzeug-Parameter vFzg, A, B, M, P abhängig sind. Je nach Topographie 11 an der aktuellen Position P des Fahrzeugs 100 ist der Streckenabschnitts-Startpunkt DS abhängig von einem Reaktionsvermögen des Fahrzeuges 100. Weist das Fahrzeug 100 ein höheres maximal verfügbares Antriebsmoment A oder ein höheres maximal verfügbares Bremsmoment B auf, so kann es bei einer Steigung 12 oder bei einem Gefälle 13 schneller auf eine mögliche Änderung in der Fahrzeug-Soll-Verzögerung vSoll reagieren. Somit sind bei der Berechnung der Fahrzeug-Soll-Geschwindigkeit vSoll bzw. für die Berechnungskoeffizienten W, X, Y, Z Streckeninformationen I relevant, die näher am Fahrzeug 100 liegen als bei einem Fahrzeug 100, das aufgrund eines geringeren maximal verfügbaren Antriebsmoments A bzw. maximal verfügbaren Bremsmoments B erst zu einem späteren Zeitpunkt eine entsprechend gerichtete Beschleunigung auf die Straße bringen kann.

Gleiches gilt für den Streckenabschnitts-Endpunkt, der in Abhängigkeit von der kinetischen Energie Ekin bzw. von der Fahrzeugmasse M und der aktuellen Fahrzeuggeschwindigkeit vFzg näher am Fahrzeug 100 liegt oder weiter entfernt ist. Dies ist in dem Fall ebenfalls insbesondere abhängig vom maximal verfügbaren Antriebsmoment A oder dem maximal verfügbaren Antriebsmoment B, die festlegen, wie stark das Fahrzeug 100 mit seiner kinetischen Energie Ekin beschleunigt oder abgebremst werden kann.

Dem Algorithmus 16 in der externen Recheneinheit 10, der die Berechnungskoeffizienten W, X, Y, Z ermittelt, werden also lediglich Streckeninformationen I in dem vorausliegenden Streckenverlauf D zur Verfügung gestellt, da diese zur Bestimmung einer spritsparenden Fahrzeug-Soll-Geschwindigkeit vSoll ausreichen. Dadurch können die Rechenzeit und der Rechenaufwand sowie die Datenmenge auf der externen Recheneinheit 10 optimiert und die zu übertragende Signallänge des Cloud-Signals SCloud reduziert werden. Dadurch, dass der externen Recheneinheit 10 über das Cloud-Signal SCloud sowohl die Fahrzeuggeschwindigkeit vFzg als auch die Fahrzeugmasse M ständig aktuell übermittelt wird, kann der vorausliegende Streckenabschnitt D auf der externen Recheneinheit 10 ständig in Abhängigkeit der kinetischen Energie Ekin aktualisiert und dem Algorithmus 16 bereitgestellt werden.

Analog ist auch die Fahrzeug-Soll-Verzögerung zSoll aus den Berechnungskoeffizienten W, X, Y, Z auf dem Steuergerät 2 zu bestimmen, wobei ebenfalls beispielsweise das maximal verfügbare Bremsmoment B, das maximal verfügbare Antriebsmoment A, die Fahrzeugmasse M sowie Streckeninformationen I, beispielsweise Steigungen 12 und Gefälle 13, entsprechend gewichtet werden, um eine Fahrzeug-Soll-Verzögerung zSoll zu erhalten.

Das Verfahren zum adaptiven Regeln einer Fahrzeuggeschwindigkeit vFzg kann beispielsweise derartig durchgeführt werden:

In einem anfänglichen Schritt St0 wird die Geschwindigkeitsregelanlage 200 gestartet, beispielsweise mit Betätigung eines entsprechenden Schalters durch den Fahrer. In einem ersten Schritt St1 wird die Fahrzeugreferenzgeschwindigkeit vRef festgelegt, vorzugsweise durch den Fahrer. Optional kann in einem zweiten Schritt St2 ein oberer Geschwindigkeitsgrenzwert vo und eine unterer Geschwindigkeitsgrenzwert vu festgelegt werden.

In einem dritten Schritt St3 werden fahrdynamische Fahrzeug-Parameter vFzg, M, A, B, P bestimmt, die aktuell im Fahrzeug 100 vorliegen und die von entsprechenden Einrichtungen 3, 4, 5, AS, BS im Fahrzeug 100 zur Verfügung gestellt werden können. Diese werden in einem vierten Schritt St4 über ein Cloud-Signal SCloud im Netzwerk N an eine externe Recheneinheit 10 übermittelt.

Diese ermittelt in einem fünften Schritt St5 Berechnungskoeffizienten W, X, Y, Z, wobei diese vom Algorithmus 16 bereitgestellt werden, wobei der Algorithmus 16 beispielsweise mittels Simulationen oder anhand von Erfahrungswerten Berechnungskoeffizienten W, X, Y, Z, ermittelt und diese für mehrere Positionen P im Kartensystem 15 abspeichert. Werden über das Cloud-Signal SCloud Fahrzeug-Parameter vFzg, M, A, B, P an die externe Recheneinheit 10 übermittelt, werden die abgespeicherten Berechnungskoeffizienten W, X, Y, Z für die entsprechende Position P des Fahrzeuges 100 abgerufen und zur Übermittlung bereitgestellt. In einem sechsten Schritt St6 werden die Berechnungskoeffizienten W, X, Y, Z über das Cloud-Signal SCloud an das Steuergerät 2 beispielsweise mittels eines Mobilfunksignals oder dgl. übermittelt, auf dem in einem siebten Schritt St7 die Fahrzeug-Soll-Geschwindigkeit vSoll und/oder die Fahrzeug-Soll-Verzögerung zSoll berechnet wird. Alternativ kann der siebte Schritt St7 auch bereits auf der externen Recheneinheit 10 durchgeführt werden, so dass über das Cloud-Signal SCloud bereits die Fahrzeug-Soll-Geschwindigkeit vSoll und/oder die Fahrzeug-Soll-Verzögerung zSoll übermittelt wird.

Im letzten Schritt St8 werden die Bremsen 6 und/oder der Motor 7 und/oder das Getriebe 8 des Fahrzeuges 100 durch die Geschwindigkeitsregelanlage 200 angesteuert, um die Fahrzeug-Soll-Geschwindigkeit vSoll ggf. mit der entsprechenden Fahrzeug-Soll-Verzögerung zSoll einzustellen und somit die aktuelle Fahrzeuggeschwindigkeit vFzg spritsparend an die vom Fahrer vorgegebene Fahrzeugreferenzgeschwindigkeit vRef anzunähern.

Bezugszeichenliste (Bestandteil der Beschreibung)

| | |
|---|---|
| 1 | Räder des Fahrzeuges 1 |
| 2 | Steuergerät |
| 3 | Positionsbestimmungssystem |
| 4 | Massebestimmungssystem |
| 5 | Raddrehzahlsensoren |
| 6 | Bremsen |
| 7 | Motor |
| 8 | Getriebe |
| 10 | externe Recheneinheit |
| 11 | Topographie |
| 12 | Steigung |
| 13 | Gefälle |
| 14 | Geschwindigkeitsbegrenzung |

EP 3 929 044 B1

| 15 | Kartensystem |
|---|---|
| 16 | Algorithmus |
| 17 | Internetinformationsdienst |
| 18 | Kurven |
| 19 | Streckenverengung |
| 20 | Verkehrsinformation |
| 21 | Umfeld-Sensor |
| 100 | Fahrzeug |
| 200 | Geschwindigkeitsregelanlage |
| α | Kurvenradius |
| A | maximal verfügbares Antriebsmoment |
| AS | Antriebssteuergerät |
| B | maximal verfügbares Bremsmoment |
| BS | Bremssteuergerät |
| D | vorausliegender Streckenabschnitt |
| DE | Streckenabschnitts-Startpunkt |
| DS | Streckenabschnitts-Endpunkt |
| Ekin | kinetische Energie |
| GS | Getriebesteuerung |
| I | Streckeninformationen |
| M | Fahrzeugmasse |
| P | Position |
| SCloud | Cloud-Signal |
| SU | Signal des Umfeld-Sensors |
| t | Zeit |
| vFzg | Fahrzeuggeschwindigkeit |
| vmax | Höchstgeschwindigkeit |
| vo | obere Grenzgeschwindigkeit |
| vRef | Referenzgeschwindigkeit |
| vSoll | Fahrzeug-Soll-Geschwindigkeit |
| vu | untere Grenzgeschwindigkeit |
| W | erster Berechnungskoeffizient |
| X | zweiter Berechnungskoeffizient |
| Y | dritter Berechnungskoeffizient |
| Z | vierter Berechnungskoeffizient |
| zSoll | Fahrzeug-Soll-Verzögerung |

St0, St1, St2, St3, St4, St5, St6, St7, St8    Verfahrensschritte

**Patentansprüche**

1.  Verfahren zum adaptiven Regeln einer Fahrzeuggeschwindigkeit (vFzg) in einem Fahrzeug (100), insbesondere Nutzfahrzeug, mit einer Geschwindigkeitsregelanlage (200), mit mindestens den folgenden Schritten:

    Festlegen einer Referenzgeschwindigkeit (vRef);
    Ansteuern eines Motors (7) und/oder von Bremsen (6) und/oder eines Getriebes (8) des Fahrzeuges (100) durch die Geschwindigkeitsregelanlage (200) in Abhängigkeit einer Fahrzeug-Soll-Geschwindigkeit (vSoll) und/oder einer Fahrzeug-Soll-Verzögerung (zSoll) zum spritsparenden Anpassen der aktuell vorliegenden Fahrzeuggeschwindigkeit (vFzg) an die Referenzgeschwindigkeit (vRef),
    wobei die Fahrzeug-Soll-Geschwindigkeit (vSoll) und/oder die Fahrzeug-Soll-Verzögerung (zSoll) für eine durch fahrdynamische Fahrzeug-Parameter (vFzg, M, A, B, P) definierte, aktuelle Fahrdynamiksituation des Fahrzeuges (100) in Abhängigkeit von mindestens einem Berechnungskoeffizienten (W, X, Y, Z) bestimmt wird,
    wobei der mindestens eine Berechnungskoeffizient (W, X, Y, Z) von einer externen Recheneinheit (10) außerhalb des Fahrzeugs (100) in Abhängigkeit der aktuell vorliegenden fahrdynamischen Fahrzeug-Parameter (vFzg, M, A, B, P) sowie in Abhängigkeit von aktuell vorliegenden Streckeninformationen (I) für einen vorausliegenden Streckenabschnitt (D) bereitgestellt wird,
    wobei der vorausliegende Streckenabschnitt (D) anhand der aktuell vorliegenden fahrdynamischen Fahrzeug-Parameter (vFzg, M, A, B, P) festgelegt wird,
**dadurch gekennzeichnet, dass**
als fahrdynamische Fahrzeug-Parameter eine aktuell vorliegende Position (P) und eine aktuell vorliegende Fahrzeug-Geschwindigkeit (vFzg) und eine aktuelle Fahrzeugmasse (M) und ein aktuell maximal verfügbares Antriebsmoment (A) und ein aktuell maximal verfügbares Bremsmoment (B) verwendet werden, wobei zum Berechnen der Fahrzeug-Soll-Geschwindigkeit (vSoll) und/oder der Fahrzeug-Soll-Verzögerung (zSoll) das aktuell maximal verfügbare Bremsmoment (B) mit einem ersten Berechnungskoeffizienten (W) und die aktuelle Fahrzeugmasse (M) mit einem zweiten Berechnungskoeffizienten (X) und das aktuell maximal verfügbare Antriebsmoment (A) mit einem dritten Berechnungskoeffizienten (Y) gewichtet werden und eine Streckeninformation (I) mit einem vierten Berechnungsfaktor (Z) berücksichtigt wird, wobei ein Algorithmus (16) auf der externen Recheneinheit (10) den mindestens einen Berechnungskoeffizienten (W, X, Y, Z) in Abhängigkeit der aktuell vorliegenden Streckeninformationen (I) und einer Position (P) des Fahrzeuges (100) herleitet, wobei der Algorithmus (16) zur Berechnung des mindestens einen Berechnungskoeffizienten (W, X, Y, Z) lediglich Streckeninformationen (I) berücksichtigt, die in dem vorausliegenden Streckenabschnitt (D) liegen, zum Begrenzen der vom Algorithmus (16) zu verarbeitenden Datenmenge.

2. Verfahren nach Anspruch 1, **dadurch gekennzeichnet, dass** der von dem Algorithmus (16) hergeleitete mindestens eine Berechnungskoeffizient (W, X, Y, Z) in einem die Streckeninformationen (I) beinhaltenden Kartensystem (15) für jede Position (P) abgespeichert wird, wobei jeder Position (P) Streckenabschnitte (D) und fahrdynamische Fahrzeug-Parameter (vFzg, M, A, B, P) zugeordnet sind.

3. Verfahren nach Anspruch 2, **dadurch gekennzeichnet, dass** die Streckeninformationen (I) auf dem Kartensystem (15), insbesondere über einen Internetinformationsdienst (17), aktuell gehalten werden.

4. Verfahren nach einem der Ansprüche 2 bis 3, **dadurch gekennzeichnet, dass** der Algorithmus (16) den mindestens einen Berechnungskoeffizienten (W, X, Y, Z) mit dem geringsten Spritverbrauch für den vorausliegenden Streckenabschnitt (D) anhand von Simulationen herleitet.

5. Verfahren nach einem der vorhergehenden Ansprüche, **dadurch gekennzeichnet, dass** der vorausliegende Streckenabschnitt (D) in Abhängigkeit der aktuellen Fahrzeugmasse (M) und der aktuellen Fahrzeuggeschwindigkeit (vFzg), insbesondere in Abhängigkeit der kinetischen Energie (Ekin) des Fahrzeuges (100), bestimmt wird.

6. Verfahren nach Anspruch 5, **dadurch gekennzeichnet, dass** ein Streckenabschnitts-Startpunkt (DS) und ein Streckenabschnitts-Endpunkt (DE) des vorausliegenden Streckenabschnittes (D) in Abhängigkeit des maximal verfügbaren Antriebsmoments (A) und/oder des maximal verfügbaren Bremsmomentes (B) bestimmt werden.

7. Verfahren nach einem der vorhergehenden Ansprüche, **dadurch gekennzeichnet, dass** die Fahrzeug-Soll-Geschwindigkeit (vSoll) und/oder die Fahrzeug-Soll-Verzögerung (zSoll) in einem Steuergerät (2), insbesondere der Geschwindigkeitsregelanlage (200), im Fahrzeug (100) anhand des mindestens einen von der externen Recheneinheit (10) ermittelten Berechnungskoeffizienten (W, X, Y, Z) berechnet und/oder eingestellt wird.

8. Verfahren nach einem der vorhergehenden Ansprüche, **dadurch gekennzeichnet, dass** die Fahrzeug-Parameter (vFzg, A, B, M, P) drahtlos über ein Cloud-Signal (SCloud) an die externe Recheneinheit (10) übertragen werden und der daraus ermittelte mindestens eine Berechnungskoeffizient (W, X, Y, Z) über das Cloud-Signal (SCloud) drahtlos von der externen Recheneinheit (10) an das Steuergerät (2) übermittelt wird.

9. Verfahren nach einem der vorhergehenden Ansprüche, **dadurch gekennzeichnet, dass** die externe Recheneinheit (10) eine Cloud-basierte Recheneinheit ist, wobei der mindestens eine Berechnungskoeffizient (W, X, Y, Z) auf der externen Recheneinheit (10) für mehrere Fahrzeuge (100) gleichzeitig bereitgestellt werden kann.

10. Verfahren nach einem der vorhergehenden Ansprüche, **dadurch gekennzeichnet, dass** als Streckeninformationen (I) eine Topographie (11), insbesondere Steigungen (12), Gefälle (13), Kurven (18) mit einem Kurvenradius ($\alpha$), Streckenverengungen (19), und/oder Geschwindigkeitsbegrenzungen (14) und/oder Verkehrsinformationen (20) berücksichtigt werden können.

11. Verfahren nach einem der vorhergehenden Ansprüche, **dadurch gekennzeichnet, dass** die Fahrzeug-Soll-Geschwindigkeit (vSoll) innerhalb eines oberen Geschwindigkeitsgrenzwertes (vo) und eines unteren Geschwindigkeitsgrenzwertes (vu) eingestellt wird.

12. Geschwindigkeitsregelanlage (200) eines Fahrzeugs (100), insbesondere Nutzfahrzeugs, mindestens aufweisend:

ein Steuergerät (2) zur Durchführung des Verfahrens nach einem der Ansprüche 1 bis 11,
ein Positionsbestimmungssystem (3) zum Ermitteln einer aktuellen Position (P),
ein Massebestimmungssystem (4) zum Ermitteln einer aktuellen Fahrzeugmasse (M), Raddrehzahlsensoren (5) zum Ermitteln einer aktuellen Geschwindigkeit (vFzg), ein Antriebssteuergerät (AS) zum Ansteuern des Motors (7) sowie zum Bereitstellen des aktuell maximal verfügbaren Antriebsmoments (A) und ein Bremssteuergerät (BS) zum Ansteuern der Bremsen (6) sowie zum Bereitstellen des aktuell maximal verfügbaren Bremsmomentes (B)
wobei das Steuergerät (2) ausgebildet ist, die fahrdynamischen Fahrzeug-Parameter (vFzg, A, B, M, P) einzulesen und drahtlos über ein Cloud-Signal (SCloud) an eine externe Recheneinheit (10) zu übermitteln und über das Cloud-Signal (SCloud) mindestens einen Berechnungskoeffizienten (W, X, Y, Z) von der externen Recheneinheit (10) zu empfangen,
aus dem mindestens einen Berechnungskoeffizienten (W, X, Y, Z) eine Fahrzeug-Soll-Geschwindigkeit (vSoll) und/oder eine Fahrzeug-Soll-Verzögerung (zSoll) zu bestimmen, zum Ansteuern des Motors (7), und/oder der Bremsen (6) und/oder des Getriebes (8) des Fahrzeuges (100), so dass sich die aktuell vorliegende Fahrzeuggeschwindigkeit (vFzg) spritsparend an die vom Fahrer vorgegebene Fahrzeugreferenzgeschwindigkeit (vRef) anpasst.

13. Fahrzeug (100), insbesondere Nutzfahrzeug (100), mit einer
Geschwindigkeitsregelanlage (200) nach Anspruch 12, geeignet zur Durchführung eines Verfahrens nach einem der Ansprüche 1 bis 11.

## Claims

1. Method for adaptively controlling a vehicle speed (vFzg) in a vehicle (100), in particular a commercial vehicle, comprising a cruise control system (200), which method comprises at least the following steps:

establishing a reference speed (vRef);
controlling an engine (7) and/or brakes (6) and/or a transmission (8) of the vehicle (100) by the cruise control system (200) depending on a vehicle target speed (vSoll) and/or on a vehicle target deceleration (zSoll) for fuel-efficient adaptation of the currently existing vehicle speed (vFzg) to the reference speed (vRef),
the vehicle target speed (vSoll) and/or the vehicle target deceleration (zSoll) for a current driving-dynamic situation of the vehicle (100), defined by driving-dynamic vehicle parameters (vFzg, M, A, B, P), being determined depending on at least one calculation coefficient (W, X, Y, Z),
the at least one calculation coefficient (W, X, Y, Z) being provided by an external computing unit (10) outside the vehicle (100) depending on the currently existing driving-dynamic vehicle parameters (vFzg, M, A, B, P) and depending on currently existing route information (I) for a route portion (D) ahead,
the route portion (D) ahead being established based on the currently existing driving-dynamic vehicle parameters (vFzg, M, A, B, P),
**characterized in that**
a currently existing position (P) and a currently existing vehicle speed (vFzg) and a current vehicle mass (M) and a maximum currently available drive torque (A) and a maximum currently available braking torque (B) are used as driving-dynamic vehicle parameters,
the maximum currently available braking torque (B) being weighted with a first calculation coefficient (W), the current vehicle mass (M) with a second calculation coefficient (X), and the maximum currently available drive torque (A) with a third calculation coefficient (Y) in order to calculate the vehicle target speed (vSoll) and/or the vehicle target deceleration (zSoll), and route information (I) being taken into account via a fourth calculation factor (Z), an algorithm (16) on the external computing unit (10) deriving the at least one calculation coefficient (W, X, Y, Z) depending on the currently existing route information (I) and on a position (P) of the vehicle (100),
the algorithm (16) for calculating the at least one calculation coefficient (W, X, Y, Z) only taking into account route information (I) which lies in the route portion (D) ahead, in order to restrict the amount of data to be processed by the algorithm (16).

2. Method according to claim 1, **characterized in that** the at least one calculation coefficient (W, X, Y, Z) derived by the algorithm (16) is stored for each position (P) in a map system (15) containing the route information (I), each position (P) being assigned route portions (D) and driving-dynamic vehicle parameters (vFzg, M, A, B, P).

3. Method according to claim 2, **characterized in that** the route information (I) on the map system (15) is kept up to date, in particular via an Internet information service (17).

4. Method according to claim 2 or claim 3, **characterized in that** the algorithm (16) derives the at least one calculation coefficient (W, X, Y, Z) which has the lowest fuel consumption for the route portion (D) ahead on the basis of simulations.

5. Method according to any of the preceding claims, **characterized in that** the route portion (D) ahead is determined depending on the current vehicle mass (M) and on the current vehicle speed (vFzg), in particular depending on the kinetic energy (Ekin) of the vehicle (100).

6. Method according to claim 5, **characterized in that** a route portion start point (DS) and a route portion end point (DE) of the route portion (D) ahead are determined depending on the maximum available drive torque (A) and/or on the maximum available braking torque (B).

7. Method according to any of the preceding claims, **characterized in that** the vehicle target speed (vSoll) and/or the vehicle target deceleration (zSoll) is calculated and/or set in a control device (2), in particular of the cruise control system (200), in the vehicle (100) on the basis of the at least one calculation coefficient (W, X, Y, Z) ascertained by the external computing unit (10).

8. Method according to any of the preceding claims, **characterized in that** the vehicle parameters (vFzg, A, B, M, P) are transmitted wirelessly via a cloud signal (SCloud) to the external computing unit (10), and the at least one calculation coefficient (W, X, Y, Z) ascertained therefrom is transmitted wirelessly via the cloud signal (SCloud) from the external computing unit (10) to the control device (2).

9. Method according to any of the preceding claims, **characterized in that** the external computing unit (10) is a cloud-based computing unit, it being possible to provide the at least one calculation coefficient (W, X, Y, Z) on the external computing unit (10) for a plurality of vehicles (100) simultaneously.

10. Method according to any of the preceding claims, **characterized in that** a topography (11), in particular inclines (12), gradients (13), curves (18) which have a curve radius ($\alpha$), route narrowings (19), and/or speed restrictions (14) and/or traffic information (20) can be taken into account as route information (I).

11. Method according to any of the preceding claims, **characterized in that** the vehicle target speed (vSoll) is set within an upper speed limit (vo) and a lower speed limit (vu).

12. Cruise control system (200) of a vehicle (100), in particular a commercial vehicle, comprising at least:

a control device (2) for carrying out the method according to any of claims 1 to 11,
a position determination system (3) for ascertaining a current position (P), a mass determination system (4) for ascertaining a current vehicle mass (M), wheel speed sensors (5) for ascertaining a current speed (vFzg), a drive control device (AS) for controlling the motor (7) and for providing the maximum currently available drive torque (A), and a brake control device (BS) for controlling the brakes (6) and for providing the maximum currently available braking torque (B),
wherein the control device (2) is designed to read in the driving-dynamic vehicle parameters (vFzg, A, B, M, P) and to transmit them wirelessly via a cloud signal (SCloud) to an external computing unit (10) and to receive via the cloud signal (SCloud) at least one calculation coefficient (W, X, Y, Z) from the external computing unit (10), to determine, from the at least one calculation coefficient (W, X, Y, Z), a vehicle target speed (vSoll) and/or a vehicle target deceleration (zSoll) for controlling the engine (7), and/or the brakes (6) and/or the transmission (8) of the vehicle (100) so that the currently existing vehicle speed (vFzg) adapts to the vehicle reference speed (vRef) specified by the driver in a fuel-efficient manner.

13. Vehicle (100), in particular a commercial vehicle (100), comprising a cruise control system (200) according to claim 12, suited for carrying out a method according to any of claims 1 to 11.

**Revendications**

1. Procédé permettant la régulation adaptative d'une vitesse de véhicule (vFzg) dans un véhicule (100), en particulier un véhicule utilitaire, comportant une installation de régulation de vitesse (200), comportant au moins les étapes suivantes :

   établissement d'une vitesse de référence (vRef) ;
   commande d'un moteur (7) et/ou de freins (6) et/ou d'une transmission (8) du véhicule (100) par l'installation de régulation de vitesse (200) en fonction d'une vitesse de consigne de véhicule (vSoll) et/ou d'une décélération de consigne de véhicule (zSoll) permettant d'adapter la vitesse de véhicule (vFzg) actuellement présente à la vitesse de référence (vRef) de manière à économiser du carburant,
   dans lequel la vitesse de consigne de véhicule (vSoll) et/ou la décélération de consigne de véhicule (zSoll) sont déterminées pour une situation de dynamique de conduite actuelle du véhicule (100) définie par des paramètres de véhicule dynamiques de conduite (vFzg, M, A, B, P) en fonction d'au moins un coefficient de calcul (W, X, Y, Z),
   dans lequel l'au moins un coefficient de calcul (W, X, Y, Z) est mis à disposition par une unité de calcul externe (10) à l'extérieur du véhicule (100) en fonction des paramètres de véhicule dynamiques de conduite (vFzg, M, A, B, P) actuellement présents ainsi qu'en fonction d'informations de route (I) actuellement présentes pour un précédent tronçon de route (D),
   dans lequel le précédent tronçon de route (D) est établi à l'aide des paramètres de véhicule dynamiques de conduite (vFzg, M, A, B, P) actuellement présents,
   **caractérisé en ce que**
   une position (P) actuellement présente, une vitesse de véhicule (vFzg) actuellement présente, une masse de véhicule (M) actuellement présente, un couple d'entraînement maximal disponible (A) actuel et un couple de freinage maximal disponible (B) actuel sont utilisés comme paramètres de véhicule dynamiques de conduite,
   dans lequel, pour le calcul de la vitesse de consigne de véhicule (vSoll) et/ou la décélération de consigne de véhicule (zSoll), le couple de freinage maximal disponible (B) actuel est pondéré avec un premier coefficient de calcul (W) et la masse de véhicule (M) actuelle est pondérée avec un deuxième coefficient de calcul (X) et le couple d'entraînement maximal disponible (A) actuel est pondéré avec un troisième coefficient de calcul (Y) et des informations de route (I) sont prises en compte avec un quatrième facteur de calcul (Z), dans lequel un algorithme (16) sur l'unité de calcul externe (10) déduit l'au moins un coefficient de calcul (W, X, Y, Z) en fonction des informations de route (I) actuellement disponibles et d'une position (P) du véhicule (100),
   dans lequel l'algorithme (16) permettant de calculer l'au moins un coefficient de calcul (W, X, Y, Z) prend uniquement en compte des informations de route (I) qui se trouvent dans le précédent tronçon de route (D) pour permettre de limiter la quantité de données à traiter par l'algorithme (16).

2. Procédé selon la revendication 1, **caractérisé en ce que** l'au moins un coefficient de calcul (W, X, Y, Z) déduit par l'algorithme (16) est mémorisé pour chaque position (P) dans un système cartographique (15) contenant les informations de route (I), dans lequel des tronçons de route (D) et des paramètres de véhicule dynamiques de conduite (vFzg, M, A, B, P) sont associés à chaque position (P).

3. Procédé selon la revendication 2, **caractérisé en ce que** les informations de route (I) sont maintenues à jour sur le système cartographique (15), en particulier par l'intermédiaire d'un service d'information par Internet (17).

4. Procédé selon l'une des revendications 2 à 3, **caractérisé en ce que** l'algorithme (16) déduit l'au moins un coefficient de calcul (W, X, Y, Z) avec la plus faible consommation de carburant pour le précédent tronçon de route (D) à l'aide de simulations.

5. Procédé selon l'une des revendications précédentes,
   **caractérisé en ce que** le précédent tronçon de route (D) est déterminé en fonction de la masse de véhicule (M) actuelle et de la vitesse de véhicule (vFzg) actuelle, en particulier en fonction de l'énergie cinétique (Ekin) du véhicule (100).

6. Procédé selon la revendication 5, **caractérisé en ce qu'**un point de départ de tronçon de route (DS) et un point d'arrivée de tronçon de route (DE) du précédent tronçon de route (D) sont déterminés en fonction du couple d'entraînement maximal disponible (A) et/ou du couple de freinage maximal disponible (B).

7. Procédé selon l'une des revendications précédentes,
   **caractérisé en ce que** la vitesse de consigne de véhicule (vSoll) et/ou la décélération de consigne de véhicule (zSoll) sont calculées et/ou réglées dans un appareil de commande (2), en particulier l'installation de régulation de vitesse (200), dans le véhicule (100) à l'aide de l'au moins un coefficient de calcul (W, X, Y, Z) déduit par l'unité de calcul externe (10).

8.  Procédé selon l'une des revendications précédentes,
    **caractérisé en ce que** les paramètres de véhicule (vFzg, A, B, M, P) sont transmis sans fil à l'unité de calcul externe (10) par l'intermédiaire d'un signal en nuage (SCloud) et l'au moins un coefficient de calcul (W, X, Y, Z) déduit à partir de ceux-ci est communiqué sans fil depuis l'unité de calcul externe (10) à l'appareil de commande (2) par l'intermédiaire du signal en nuage (SCloud).

9.  Procédé selon l'une des revendications précédentes, **caractérisé en ce que** l'unité de calcul externe (10) est une unité de calcul basée sur un nuage, dans lequel l'au moins un coefficient de calcul (W, X, Y, Z) peut être mis simultanément à disposition sur l'unité de calcul externe (10) pour plusieurs véhicules (100).

10. Procédé selon l'une des revendications précédentes, **caractérisé en ce qu'**une topographie (11), en particulier des pentes (12), des chutes (13), des courbes (18) comportant un rayon de courbure ($\alpha$), des rétrécissements de route (19), et/ou des limitations de vitesse (14) et/ou des informations routières (20) peuvent être prises en compte comme informations de route (I).

11. Procédé selon l'une des revendications précédentes,
    **caractérisé en ce que** la vitesse de consigne de véhicule (vSoll) est réglée d'une manière comprise entre une valeur limite de vitesse supérieure (vo) et une valeur limite de vitesse inférieure (vu).

12. Installation de régulation de vitesse (200) d'un véhicule (100), en particulier d'un véhicule utilitaire, présentant au moins :

    un appareil de commande (2) permettant la mise en œuvre du procédé selon l'une des revendications 1 à 11, un système de détermination de position (3) permettant de déterminer une position (P) actuelle, un système de détermination de masse (4) permettant de déterminer une masse de véhicule (M) actuelle, des capteurs de vitesse de rotation de roue (5) permettant de déterminer une vitesse (vFzg) actuelle, un appareil de commande d'entraînement (AS) permettant de commander le moteur (7) ainsi que de mettre à disposition le couple d'entraînement maximal disponible (A) actuel et un appareil de commande de frein (BS) permettant de commander les freins (6) ainsi que de mettre à disposition le couple de freinage maximal disponible (B) actuel, dans laquelle l'appareil de commande (2) est configuré pour lire les paramètres de véhicule dynamiques de conduite (vFzg, A, B, M, P) et pour les transmettre sans fil à une unité de calcul externe (10) par l'intermédiaire d'un signal en nuage (SCloud) et pour recevoir au moins un coefficient de calcul (W, X, Y, Z) de l'unité de calcul externe (10) par l'intermédiaire du signal en nuage (SCloud),
    pour déterminer une vitesse de consigne de véhicule (vSoll) et/ou une décélération de consigne de véhicule (zSoll) à partir de l'au moins un coefficient de calcul (W, X, Y, Z) pour permettre de commander le moteur (7), et/ou les freins (6) et/ou la transmission (8) du véhicule (100), de sorte que la vitesse de véhicule (vFzg) actuellement présente s'adapte à la vitesse de référence de véhicule (vRef) présélectionnée par le conducteur de manière à économiser du carburant.

13. Véhicule (100), en particulier véhicule utilitaire (100), comportant une installation de régulation de vitesse (200) selon la revendication 12 permettant la mise en œuvre d'un procédé selon l'une des revendications 1 à 11.

**Fig. 1**

**Fig. 2**

**Fig. 3a**

**Fig. 3b**

St0

vRef — St1

vu, vo — St2

vFzg, M, A, B, P — St3

SCloud — St4

W, X, Y, Z — St5

SCloud — St6

vSoll — St7

St8

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014204206 A1
- US 20140277971 A1
- US 8386091 B1
- DE 102008039950 B4
- US 20120283928 A
- DE 102009022170 A1
- DE 102012214827 A1
- US 20140277835 A1